# EUROPÄISCHE PATENTSCHRIFT

(11) **EP 1 955 880 B1**
(45) Veröffentlichungstag und Bekanntmachung des Hinweises auf die Patenterteilung: **20.10.2010**
(21) Anmeldenummer: 08101368.2
(22) Anmeldetag: 07.02.2008
(51) Int. Cl.: B60H 1/32

(54) **Kältemittelkreislauf für eine Fahrzeugklimaanlage**
Refrigerant circuit for a vehicle air conditioner
Circuit frigorifique pour un climatisateur de véhicule

(30) Priorität: 10.02.2007 DE 102007006678
(43) Veröffentlichungstag der Anmeldung: 13.08.2008
(73) Patentinhaber: Behr-Hella Thermocontrol GmbH, 70190 Stuttgart (DE)
(72) Erfinder: Trapp, Ralph, Dr.-Ing., 33102 Paderborn (DE); Frigge, Michael, Dr.-Ing., 33102 Paderborn (DE); Michalek, David, 59555 Lippstadt (DE)
(74) Vertreter: von Kreisler Selting Werner

(56) Entgegenhaltungen:
- DE-A1- 10 141 592
- JP-A- 2002 061 969
- JP-A- 2003 054 249

## Beschreibung

Die Erfindung betrifft einen Kältemittelkreislauf für eine Klimaanlage für den Innenraum eines Fahrzeuges, wie er z.B. aus DE-A-101 41 592 bekannt ist.

Klimaanlagen mit dem Kältemittel R744 (CO2) bieten nicht nur Vorteile beim Umweltschutz, sondern auch bei Kälteleistung, Abkühldynamik und beim Wirkungsgrad. Aufgrund der thermodynamischen Eigenschaften von R744 und der hohen Systemdrücke ist ein R744 Kältekreislauf jedoch schwieriger zu beherrschen als ein konventioneller mit R134a als Kältemittel. Der Aufwand bezüglich der Regelungsverfahren ist dementsprechend größer als bei herkömmlichen Systemen.

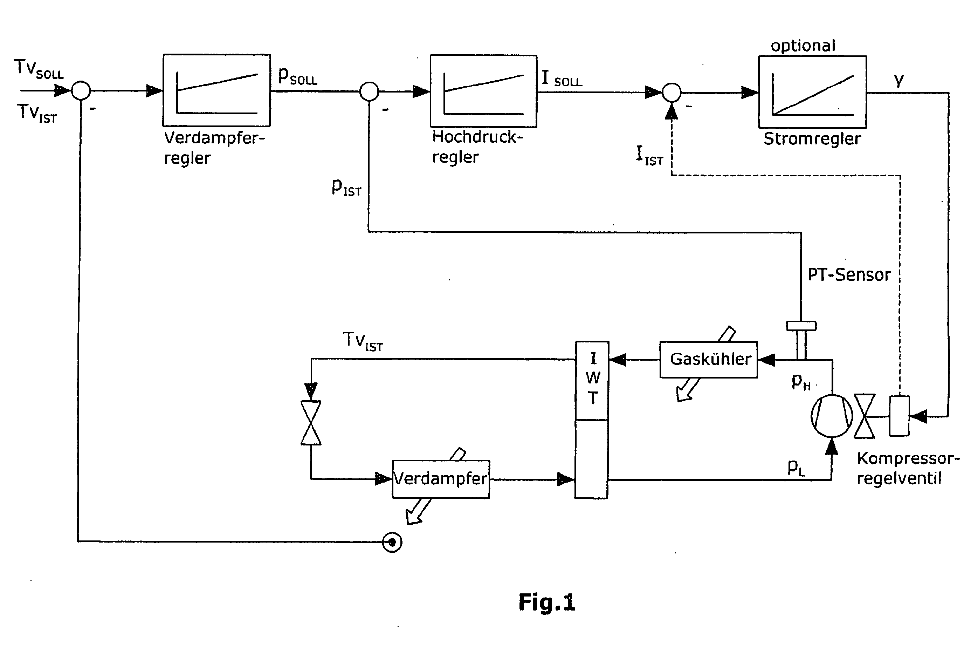

Ähnlich wie bei konventionellen Kältekreisläufen wird auch bei R744-Systemen als Hauptgröße die Temperatur der Luft nach dem Verdampfer auf einen vorgegebenen Wert geregelt. Eine kritische Größe im System ist der Druck des Kältemittels nach dem Kompressor (Hochdruckseite). Dieser darf gewisse Grenzen aus Sicherheitsgründen nicht überschreiten. Der Druck des verdichteten Kältemittels hängt neben der angeforderten Kälteleistung auch von Größen wie Umgebungstemperatur, Luftfeuchte und Kondensatorbelüftung ab. Die Verdampfertemperatur wird maßgeblich durch die Druckdifferenz von Hochdruck- und Saugdruckseite beelnflusst. Daher hängt die Verdampfertemperatur indirekt von dem Hochdruck ab. Existierende Regelstrategien (siehe z.B. Fig. 1) verwenden daher eine Regelkaskade, in der ein separater Hochdruckregler dem Verdampfertemperaturregler unterlagert ist. Je nach Verdichtertyp bzw. Ventiltyp (Expansionsorgan), über den die Kälteleistung beeinflusst werden kann, ist zusätzlich ein unterlagerter Stromregler notwendig. Bei Ventilen, die kontinuierlich verstellt werden können, wird die Kälteleistung durch den Ventil-Ansteuerstrom gesteuert. Hier ist eine unterlagerte Stromregelung erforderlich. Bei Ventilen, die mit niedriger Frequenz getaktet werden und damit nur zwischen geöffnetem und geschlossenem Zustand wechseln können, ist dies nicht notwendig.

Um eine hohe Regelgüte zu erhalten, sollte bei einer Kaskadenregelung der innere Regelkrels deutlich schneller sein als die äußeren. Dies ist jedoch bei R744-Regelkreisen mit unterlagerter Hochdruckregelung nicht immer gegeben. Nachteilig ist weiterhin der erhöhte Abstimmungsaufwand einer solchen Regelung.

Aufgabe der Erfindung ist es, einen Kältemittelkreislauf für eine Klimaanlage für den Innenraum eines Fahrzeuges zu schaffen, bei dem bei einem vereinfachten Regelungskonzept schneller auf die Überschreitung von sicherheitsrelevanten Betriebsparametern reagiert werden kann.

Zur Lösung dieser Aufgabe wird mit der Erfindung ein Kältemittelkreislauf für eine Klimaanlage für den Innenraum eines Fahrzeuges vorgeschlagen, wobei der Kältemittelkreislauf versehen ist mit den Merkmalen des Anspruchs 1. Die Unteransprüche betreffen einzelne Ausgestaltungen der Erfindung.

Nach dem erfindungsgemäßen Konzept wird also im Falle der Überschreitung (Unterschreitung) eines vorgebbaren Grenzwerts für einen sicherheitsrelevanten Betriebsparameter wie beispielsweise den Druck des Kältemittels auf der Hochdruckseite des Verdichters, auf die Regeldifferenz des Verdampfertemperaturreglers eingewirkt, und zwar dahingehend, dass die Kompressorleistung verringert wird. Diese Maßnahme kann vorteilhafterweise auch schon dann ergriffen werden, wenn sich abzeichnet, dass sich der sicherheitsrelevante Betriebsparameter zu unzulässigen Werten hin verändert. Bei Überschreitung eines Grenzwertes (kritischer Wert) regelt der Kältemittelkreislauf dann nicht mehr im Hinblick auf die Verdampfertemperatur, sondern auf den sicherheitsrelevanten Betriebsparameter. Sollte der sicherheitsrelevante Betriebsparameter dann den kritischen Bereich wieder verlassen, kann nach und nach oder auch abrupt wieder auf die Verdampfertemperaturregelung umgeschaltet werden, indem die erfindungsgemäß zuvor durchgeführte Beeinflussung der Reglerdifferenz wieder zurückgenommen und schließlich vollständig aufgehoben wird.

Bei dem sicherheitsrelevanten Parameter handelt es sich, wie bereits zuvor erwähnt, beispielsweise um den Druck des Kältemittels, auf den dieses durch den Verdichter verdichtet wird. Zusätzlich bzw. alternativ kann auch die Temperatur des verdichteten Kältemittels als sicherheitsrelevanter Betriebsparameter betrachtet werden. Ein weiteres Beispiel für einen sicherheitsrelevanten Betriebsparameter ist die Temperatur der den Verdampfer verlassenden Luft. Zum Zwecke des Schutzes vor einer Vereisung des Verdampfers darf diese Lufttemperatur einen vorgebbaren minimalen Wert, bei dem ein Vereisen von Feuchtigkeit auf der Oberfläche des Verdampfers entstehen könnte, nicht unterschreiten.

In vorteilhafter Weiterbildung der Erfindung ist vorgesehen, dass der Kältemittelkreislauf mehrere Sensoren zur Erfassung mehrerer sicherheitsrelevanter Betriebsparameter aufweist, wobei die Auswerte- und Ausgabeeinheit jeden von den Sensoren erfassten Betriebsparameter dahingehend auswertet, ob sein aktueller Wert Innerhalb eines nicht zulässigen Bereichs liegt oder sich ausgehend vom zulässigen Bereich einem unzulässigen Bereich nähert, und wobei die Auswerte- und Ausgabeeinheit in Abhängigkeit von der Auswertung der aktuellen Werte der Betriebsparameter die Differenz aus dem Sollwert und dem Istwert der Temperatur der den Verdampfer passierenden und/oder verlassenden Luft zwecks Erhöhung der Temperatur, auf die der Verdampfer zu regeln ist, beeinflusst, wenn der aktuelle Wert mindestens eines Betriebsparameters innerhalb eines nicht zulässigen Bereichs liegt oder sich ausgehend vom zulässigen Bereich einem unzulässigen Bereich nähert.

Schließlich kann es bei einem weiteren Ausführungsbelspiel der Erfindung vorgesehen sein, dass der Verdichter ein kontinuierlich veränderbares Verdichtersteuerventil und der Verdampfertemperaturregler an seinem Ausgang einen Sollwert für einen unterlagerten Ventilregler zur Regelung des Steuerventils des Verdichters aufweist.

Die Erfindung wird nachfolgend anhand eines Ausführungsbeispiels und unter Bezugnahme auf die Zeichnung näher erläutert. Im Einzelnen zeigen dabei:
- Fig. 1: einen Kältekreislauf mit konventioneller Kaskadenregelung und
- Fig. 2: einen Kältekreislauf mit einer Schutzfunktion vor Überschreitung eines vorgebbaren Werts durch sicherheitsrelevante Betriebs- parameter gemäß einem Ausführungsbeispiel der Erfindung.

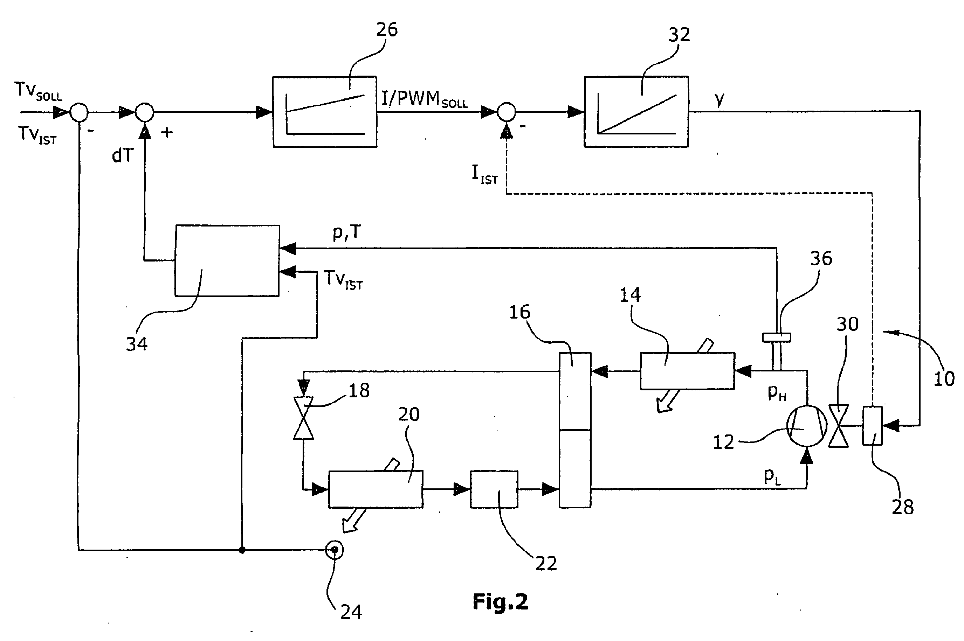

Fig. 2 zeigt ein Beispiel für einen CO2(-R744-)Kältemittelkreislauf 10 mit erfindungsgemäßer Temperaturregelung und Schutzfunktion. Der Kältemittelkreislauf 10 umfasst einen Verdichter 12, der gasförmige Kältemittel verdichtet. Das verdichtete Kältemittel gelangt über einen Gaskühler 14 und wird durch diesen abgekühlt. Anschließend passiert es einen Wärmetauscher 16, auf den später noch eingegangen wird. Durch ein Expansionsorgan bzw. Ventil 18 wird das verdichtete Kältemittel wieder entspannt, wobei es einen Verdampfer 20 durchströmt, durch welchen den Fahrgastraum zuzuführende, zu kühlende Luft gelangt. Danach erreicht das entspannte Kältemittel ein Reservoir 22, durchströmt danach den Wärmetauscher 16, durch den eventuell noch flüssige Phasen des Kältemittels in den gasförmigen Zustand überführt werden.

Der Kältemittelkreislauf 10 ist temperaturgeregelt. Zu diesem Zweck weist der Kältemittelkreislauf 10 einen Temperaturfühler 24 auf, der die Temperatur der den Verdampfer 20 verlassenden Luft, die nach dem Passieren eines Heizaggregats oder auch direkt dem Innenraum des Fahrzeuges zugeführt wird, erfasst. Diese Ist-Temperatur ist auf einen vorgegebenen Sollwert geregelt. Die Differenz beider Werte wird einem Verdampfertemperaturregler 26 zugeführt, der direkt oder indirekt ein Stellglied 28 für ein Kompressorventil 30 ansteuert. Über das Kompressorventil 30 wird der Druck, auf den das Kältemittel durch den Verdichter 12 komprimiert wird, gesteuert. In diesem Ausführungsbeispiel ist dem Verdampfertemperaturregler 26 ein Stromregler 32 nachgeschaltet, der den Versorgungsstrom für das Stellglied 28 des Kompressorventils 30 regelt.

Der Sollwert für die Verdampfertemperatur wird von einer (nicht dargestellten) übergeordneten Innenraumtemperaturregelung vorgegeben.

Der Kältemittelkreislauf 10 umfasst beispielsweise drei sicherheitsrelevante Betriebsparameter, nämlich die Temperatur und den Druck des verdichteten Kältemittels und die Temperatur der den Verdampfer 20 verlassenden Luft (Vereisungsschutz). Bei diesem Ausführungsbeispiel ist eine Schutzeinrichtung 34 vorgesehen, die dafür sorgt, dass bezüglich der drei zuvor genannten sicherheitsrelevanten Betriebsparameter kritische Bereiche nicht überschritten/unterschritten werden. Hierzu werden der Druck und die Temperatur des verdichteten Kältemittels über ein oder mehrere Sensoren 36 erfasst. Ferner wird der Schutzeinrichtung 34 der Istwert des Temperaturfühlers 24 zugeführt.

Im Normalbetrieb des Kältemittelkreislaufes 10 werden zunächst die sicherheitsrelevanten Betriebsparameter lediglich überwacht, solange sich das System in einem unkritischen Zustand befindet. Nachfolgend wird anhand des Beispiels des Drucks des verdichteten Kältemittels beschrieben, wie die Schutzmaßnahme bei diesem Ausführungsbeispiel realisiert ist.

Überschreitet der Hochdruck des verdichteten Kältemittels eine kritische Grenze, wird abhängig von der Differenz des Istwerts und des kritischen Wertes für den Druck eine Temperaturdifferenz dT errechnet, die zur Verdampfertemperaturregeldifferenz addiert bzw. subtrahiert wird. Alternativ kann diese Temperaturdifferenz auch zum Sollwert bzw. vom Istwert der Verdampfertemperatur addiert bzw. subtrahiert werden. Der Verdampfertemperaturregler 26 reduziert aufgrund der bei Überschreitung der kritischen Grenze des Drucks höheren neuen "Solltemperatur" (Tvₛₒₗₗ) entsprechend die angeforderte Kompressorleistung, so dass sich der Kältemittelkreislauf 10 nun auf den maximal zulässigen Hochdruck einregelt. Das gleiche Prinzip kann nun auch für andere Schutzmechanismen herangezogen werden. So kann mit diesem Konzept auf die gleiche Weise die Heißgastemperatur überwacht bzw. auf einen maximal zulässigen Wert geregelt werden. Weiterhin ist ein Vereisungsschutz für den Verdampfer auf diese Art und Weise realisierbar. In diesem Fall wird auf eine minimal zulässige Verdampfertemperatur eingeregelt.

Sobald die überwachten Betriebsparameter den kritischen Bereich wieder verlassen bzw. die kritische Grenze unterschreiten, wird der oben beschriebene Schutzmechanismus wieder zurückgenommen, so dass anschließend wieder die normale Verdampfertemperaturregelung erfolgt.

Auf die oben beschriebene Art und Weise ist es möglich, ohne Verwendung von Hochdruck- oder Kältemitteltemperaturreglern eine Verdampfertemperaturregelung für einen Kältemittelkreislauf 10 zu realisieren, der dennoch über Schutzfunktionen bezüglich des maximal zulässigen Hochdrucks und der maximal zulässigen Temperatur des verdichteten Kältemittels sowie über einen Vereisungsschutz verfügt. Diese drei Schutzmechanismen werden realisiert, indem im Falle der Über- bzw. Unterschreitung kritischer Grenzen auf die dem Verdampfertemperaturregler 26 zugeführten Regeldifferenz eingewirkt wird.

### BEZUGSZEICHENLISTE

- 10: Kältemittelkreislauf
- 12: Verdichter
- 14: Gaskühler
- 16: Wärmetauscher
- 18: Ventil
- 20: Verdampfer
- 22: Reservoir
- 24: Temperaturfühler
- 26: Verdampfertemperaturregler
- 28: Stellglied
- 30: Kompressorventil
- 32: Stromregler
- 34: Schutzeinrichtung
- 36: Sensoren

## Patentansprüche

1. Kältemittelkreislauf (10) für eine Klimaanlage für den Innenraum eines Fahrzeuges, mit
- einem Verdichter (12) zum Verdichten eines Kältemittels,
- mindestens einem Verdampfer (20), in dem sich das verdichtete Kältemittel zur Abkühlung von den Verdampfer (20) passierender, dem Innenraum des Fahrzeuges zuzuführender Luft entspannt,
- einem Temperaturfühler (24) zur Ermittlung des Istwerts der Temperatur der den Verdampfer (20) passierenden und/oder verlassenden Luft,
- einem Verdampfertemperaturregler (26), der eingangsseitig die Differenz zwischen dem Istwert der Temperatur der den Verdampfer (20) passierenden und/oder verlassenden Luft und einem vorgebbaren Sollwert empfängt und in Abhängigkeit von der Größe dieser Differenz den Verdichter (12) zur Veränderung des Drucks des verdichteten Kältemittels ansteuert,
- mindestens einem Sensor (36) zur Erfassung des aktuellen Werts eines sicherheltsrelevanten Betriebsparameters, der innerhalb eines zulässigen Bereichs liegen sollte und nicht innerhalb eines unzulässigen Bereichs liegen darf, und
- einer Auswerte- und Ausgabeeinheit, die den von dem Sensor (36) erfassten aktuellen Wert des Betriebsparameters dahingehend auswertet, ob dieser aktueller Wert innerhalb eines nicht zulässigen Bereichs liegt oder sich ausgehend vom zulässigen Bereich einem unzulässigen Bereich nähert,
**dadurch gekennzeichnet,**
- **dass** die Auswerte- und Ausgabeeinheit dann, wenn der aktuelle Wert des Betriebsparameters innerhalb eines nicht zulässigen Bereichs liegt oder sich ausgehend vom zulässigen Bereich einem unzulässigen Bereich nähert, in Abhängigkeit von der Differenz des aktuellen Werts und eines den zulässigen Bereich vom unzulässigen Bereich abgrenzenden kritischen Grenzwerts für den Betriebsparameter eine Temperaturdifferenz errechnet, mit der die Auswerte- und Ausgabeeinrichtung die Differenz aus dem Sollwert und dem Istwert der Temperatur der den Verdampfer (20) passierenden und/oder verlassenden Luft zwecks Erhöhung der Temperatur, auf die der Verdampfer (20) zu regeln ist, verändert.

2. Kältemittelkreislauf nach Anspruch 1, **dadurch gekennzeichnet, dass** die Veränderung der Differenz aus dem Sollwert und dem Istwert der Temperatur der den Verdampfer (20) passierenden und/oder verlassenden Luft durch Veränderung des Sollwertes und/oder des Istwertes erfolgt.

3. Kältemittelkreislauf nach Anspruch 1 oder 2, **dadurch gekennzeichnet, dass** der mindestens eine Betriebsparameter der Druck und/oder die Temperatur des verdichteten Kältemittels und/oder der Istwert der Temperatur der den Verdampfer (20) passierenden und/oder verlassenden Luft ist, wobei im letztgenannten Fall der Sensor (36) der Temperaturfühler (24) zur Ermittlung des Istwerts der Temperatur der den Verdampfer (20) passierenden und/oder verlassenden Luft ist.

4. Kältemittelkrelslauf nach einem der Ansprüche 1 bis 3, **gekennzeichnet durch** mehrere Sensoren (36) zur Erfassung mehrerer sicherheitsrelevanter Betriebsparameter, wobei die Auswerte- und Ausgabeeinheit jeden von den Sensoren (36) erfassten Betriebsparameter dahingehend auswertet, ob sein aktueller Wert innerhalb eines nicht zulässigen Bereichs liegt oder sich ausgehend vom zulässigen Bereich einem unzulässigen Bereich nähert, und wobei die Auswerte- und Ausgabeeinheit in Abhängigkeit von der Auswertung der aktuellen Werte der Betriebsparameter die Differenz aus dem Sollwert und dem Istwert der Temperatur der den Verdampfer (20) passierenden und/oder verlassenden Luft zwecks Erhöhung der Temperatur, auf die der Verdampfer (20) zu regeln ist, beeinflusst, wenn der aktuelle Wert mindestens eines Betrlebsparameters innerhalb eines nicht zulässigen Bereichs liegt oder sich ausgehend vom zulässigen Bereich einem unzulässigen Bereich nähert.

5. Kältemittelkreislauf nach einem der Ansprüche 1 bis 4, **dadurch gekennzeichnet, dass** der Verdichter (12) ein kontinuierlich veränderbares Verdichtersteuerventil aufweist und dass der Verdampfertemperaturregler (26) an seinem Ausgang einen Sollwert für einen unterlagerten Ventilregler zur Regelung des Steuerventils des Verdichters (12) aufweist.

6. Kältemitfielkreislauf nach einem der Ansprüche 1 bis 5, **dadurch gekennzeichnet, dass** das Kältemittel CO2 aufweist.

## Claims

1. Refrigerant circuit (10) for an air-condition system for the interior of a vehicle, comprising
- a compressor (12) for compressing a refrigerant,
- at least one evaporator (20) in which the compressed refrigerant relaxes to cool air that passes the evaporator (20) and is to be supplied to the vehicle interior,
- a temperature probe (24) for detecting the actual value of the temperature of the air passing and/or leaving the evaporator (20),
- an evaporator temperature control (26) which receives at the input the difference between the actual value of the temperature of the air passing and/or leaving the evaporator (20) and a predeterminable set value and controls the compressor (12) as a function of the magnitude of this difference in order to change the pressure of the compressed refrigerant,
- at least one sensor (36) for the detection of the actual value of a safety-relevant operation parameter that should be within an allowable range and must not be within an unallowable range, and
- an evaluation and output unit evaluating the actual value of the operation parameter detected by the sensor (36) to determine whether this actual value is within an unallowable range or approaches an unallowable range starting from the allowable range,
**characterized in that**
- if the actual value of the operation parameter is within an unallowable range or approaches an unallowable range starting from the allowable range, the evaluation and output unit - depending on the difference between the actual value and a critical limit value of the operational parameter delimiting the allowable range from the unallowable range - calculates a temperature difference by which the evaluation and output unit changes the difference between the set value and the actual value of the temperature of the air passing and/or leaving the evaporator (20) for the purpose of raising the temperature to which the evaporator (20) is to be controlled.

2. Refrigerant circuit of claim 1, **characterized in that** the change of the difference between the set value and the actual value of the temperature of the air passing and/or leaving the evaporator (20) is effected by changing the set value and/or the actual value.

3. Refrigerant circuit of claim 1 or 2, **characterized in that** the at least one operation parameter is the pressure and/or the temperature of the compressed refrigerant and/or the actual value of the temperature of the air passing and/or leaving the evaporator (20), wherein, in the latter case, the sensor (36) is formed by the temperature probe (24) for detecting the actual value of the temperature of the air passing and/or leaving the evaporator (20).

4. Refrigerant circuit of one of claims 1 to 3, **characterized by** a plurality of sensors (36) for detecting safety-relevant operation parameters, the evaluation and output unit evaluating each operation parameter detected by the sensors (36) to determine whether its actual value is within an unallowable range or approaches an unallowable range starting from the allowable range, and wherein - depending on the evaluation of the actual values of the operation parameters - the evaluation and output unit influences the difference between the set value and the actual value of the temperature of the air passing and/or leaving the evaporator (20) for the purpose of raising the temperature to which the evaporator (20) is to be controlled, if the actual value of at least one operation parameter is within an unallowable range or approaches an unallowable range starting from the allowable range.

5. Refrigerant circuit of one of claims 1 to 4, **characterized in that** the compressor (12) comprises a continuously variable compressor control valve, and that the output of the evaporator temperature control (26) presents a set value for a subordinate valve control for controlling the control valve of the compressor (12).

6. Refrigerant circuit of one of claims 1 to 5, **characterized in that** the refrigerant includes CO₂.

## Revendications

1. Circuit frigorifique (10) pour un climatisateur de l'intérieur d'un véhicule, comprenant
- un compresseur (12) pour comprimer un agent frigorifique,
- au moins un évaporateur (20) dans lequel se détend l'agent frigorifique pour refroidir l'air qui passe ledit évaporateur (20) et qui est à transporter vers ledit intérieur du véhicule,
- une sonde de température (24) pour la détection de la valeur réelle de la température de l'air passant et/ou quittant ledit évaporateur (20),
- un régulateur (26) de la température de l'évaporateur recevant à son entrée la différence entre ladite valeur réelle de la température de l'air passant et/ou quittant ledit évaporateur (20) et une valeur de consigne prédéterminable, et commandant ledit compresseur (12) en fonction de la magnitude de cette différence pour changer la pression dudit agent frigorifique comprimé,
- au moins un capteur (36) pour détecter la valeur actuelle d'un paramètre de fonctionnement relatif à la sécurité qui devrait se situer dans une plage admissible et qui ne doit pas se situer dans une plage inadmissible, et
- une unité d'évaluation et de sortie évaluant la valeur actuelle du paramètre de fonctionnement détectée par le capteur (36), pour déterminer si cette valeur actuelle se situe dans une plage inadmissible ou approche ladite plage inadmissible à partir de la plage admissible,
**caractérisé en ce que**
- si la valeur actuelle du paramètre de fonctionnement se situe dans une plage inadmissible ou approche ladite plage inadmissible à partir de la plage admissible, l'unité d'évaluation et de sortie calcule - en fonction de la différence de ladite valeur actuelle et d'une valeur limite critique pour ledit paramètre de fonctionnement, délimitant ladite plage admissible de ladite plage inadmissible - une différence de température utilisée par ladite unité d'évaluation et de sortie pour modifier la différence entre ladite valeur de consigne et ladite valeur réelle de la température de l'air passant et/ou quittant ledit évaporateur (20), afin d'augmenter la température sur laquelle doit être réglé ledit évaporateur (20).

2. Circuit frigorifique selon la revendication 1, **caractérisé en ce que** la modification de la différence entre ladite valeur de consigne et ladite valeur réelle de la température de l'air passant et/ou quittant ledit évaporateur (20) est effectuée par la modification de la valeur de consigne et/ou de la valeur réelle.

3. Circuit frigorifique selon la revendication 1 ou 2, **caractérisé en ce que** ledit au moins un paramètre de fonctionnement est la pression et/ou la température de l'agent frigorifique comprimé et/ou la valeur réelle de la température de l'air passant et/ou quittant ledit évaporateur (20), ou, dans le cas dernier, le capteur (36) est la sonde de température (24) pour la détection de la valeur réelle de la température de l'air passant et/ou quittant ledit évaporateur (20).

4. Circuit frigorifique selon l'une quelconque des revendications 1 à 3, **caractérisé par** plusieurs capteurs (36) pour la détection de plusieurs paramètres de fonctionnement relatifs à la sécurité, ladite unité d'évaluation et de sortie évaluant chaque paramètre de fonctionnement détecté par lesdits capteurs (36), pour déterminer si sa valeur actuelle se situe dans une plage inadmissible ou approche ladite plage inadmissible à partir de la plage admissible, et l'unité d'évaluation et de sortie influençant, en fonction de l'évaluation des valeurs actuelles des paramètres de fonctionnement, la différence entre ladite valeur de consigne et ladite valeur réelle de la température de l'air passant et/ou quittant ledit évaporateur (20) afin d'augmenter la température sur laquelle doit être réglé ledit évaporateur (20), si la valeur actuelle d'au moins un paramètre de fonctionnement se situe dans une plage inadmissible ou approche ladite plage inadmissible à partir de la plage admissible.

5. Circuit frigorifique selon l'une quelconque des revendications 1 à 4, **caractérisé en ce que** ledit compresseur (12) comprend une vanne de commande du compresseur à variation continue et que la sortie dudit régulateur (26) de la température de l'évaporateur présente une valeur de consigne pour un régulateur de vanne subordonné pour régler la vanne de commande du compresseur (12).

6. Circuit frigorifique selon l'une quelconque des revendications 1 à 5, **caractérisé en ce que** l'agent frigorifique comprend CO₂.
